(19) **Europäisches Patentamt**
**European Patent Office**
**Office européen des brevets**

(11) **EP 0 999 629 B1**

(12) **EUROPEAN PATENT SPECIFICATION**

(45) Date of publication and mention
of the grant of the patent:
**13.08.2008  Bulletin 2008/33**

(51) Int Cl.:
**H02H 6/00** (2006.01)

(21) Application number: **98203730.1**

(22) Date of filing: **06.11.1998**

(54) **Device for the thermal overload protection of an electric motor and related method**

Thermische Überlastschutzvorrichtung für einen Elektromotor und entsprechendes Verfahren

Dispositif de protection thermique contre les surcharges pour moteur électrique et procédé associè

(84) Designated Contracting States:
**BE CH DE ES FR GB IT LI NL**

(43) Date of publication of application:
**10.05.2000  Bulletin 2000/19**

(73) Proprietor: **ABB Research Ltd.**
**8050 Zürich (CH)**

(72) Inventors:
• **Corbetta, Giuliano**
**20110 Milano (IT)**

• **Manzoni, Ezio**
**24030 Terno d'Isola (Bg) (IT)**

(74) Representative: **Giavarini, Francesco et al**
**Zanoli & Giavarini S.r.l.**
**Via Melchiorre Gioia, 64**
**20125 Milano (IT)**

(56) References cited:
**US-A- 4 547 826          US-A- 5 684 342**

**Description**

The present invention relates to a device for the thermal overload protection of an electric motor and related method.

More particularly, the device according to the present invention, through the use of a suitable mathematical model, allows to simulate the thermal behaviour of the motor in relation to the currents supplying said motor and to detect thermal overload conditions, said device differing from the known art for the high degree of precision the repeatability of its operation and its flexibility during practical use.

The device according to the invention is particularly suitable for use in low-voltage electric motors and will be described hereinafter with reference to this application, without thereby limiting its applicational scope in any way.

As is known, thermal overload protection devices for electric motors, and for low voltage motors in particular, are used to monitor how much current above the rating plate value has fed a motor, for how long and starting from which initial conditions of the motor. In principles, the higher the power supply current, the shorter the time for which the motor is able to withstand the overload. When the overload condition reaches potentially dangerous values for the correct operation of the motor, the protection device intervenes, interrupting the power supply.

At present this type of protection may be provided by means of bimetallic relays, the main drawback of which consists in the extreme sensitivity to the temperature outside the motor. In fact, on account of this sensitivity, bimetallic relays cause untimely tripping of the protection system, in particular when the motor is started up again; moreover, the behaviour of the device in terms of repeatibility of operation is extremely variable.

The use of microprocessor-based electronic relays as devices for thermal overload protection is also known; an example of this type of devices is provided by US patent No. 4,547,826. According to the solution described in this patent, in order to calculate the operating temperatures of the motor and determine tripping of the protection system, a thermal model is used, the coefficients of said model being obtained by means of electric circuits which are equivalent to the thermal behaviour of the motor. In particular, in these circuits, values which are equivalent to the parameters which characterize the physical behaviour of the motor, such as equivalent thermal masses, equivalent thermal resistances, etc., are used. This involves the need of identifying these physical parameters for each specific motor to be protected and results in lack of flexibility of the protection device and unsuitability thereof for operation in those cases where there is no information on the physical parameters of the motor, but only information on the rated values of the currents involved.

The main task of the present invention is that of providing a device for the thermal overload protection of an electric motor which allows the thermal behaviour of the motor to be simulated in a precise and reliable manner, independently of the specific parameters of each individual motor, said device distinguishing itself from the devices of known type for the high degree of flexibility during use.

As a part of this task, an object of the present invention is that of providing a device for the thermal overload protection of an electric motor operation of which is independent of external factors and allows untimely tripping of the protection system to be avoided.

A further but not the last object of the present invention is to provide a device for the thermal overload protection of an electric motor that is highly reliable and relatively easy to manufacture at competitive costs.

This task, as well as these and other objects which will emerge more clearly hereinafter are achieved by a device for the thermal overload protection of an electric motor according to claim 1.

The device according to the invention, by means of the introduction of the thermal model thus conceived, is able to simulate perfectly the thermal behaviour of the motor and to carry out thermal overload protection operations which are effective, precise and repeatable; in particular, it is able to perform the function of protection of low-voltage electric motors in accordance with that laid down by the international standard IEC 947-4-1.

The above mentioned task, as well as the objects mentioned above and others as well, are also achieved by a method for the thermal overload protection of an electric motor, according to claim 8.

- calculation of the coefficients of the status equations and initial values of the status variables on the basis of the tripping times and the defined threshold values;

c) comparing at least one of said status variables with a defined threshold value and, if it exceeds said threshold, sending a tripping signal to the interruption means in order to interrupt the power supply of the motor.

Further characteristics and advantages of the invention will emerge more clearly from the description of preferred, but not exclusive embodiments of the device according to the invention, illustrated by way of a non-limiting example in the accompanying drawings, in which:

- Figure 1 shows an overall block diagram of the device according to the invention;
- Figure 2 shows a detailed block diagram of the device according to the invention;
- Figure 3 shows a block diagram of the processing means used in the device according to the invention.

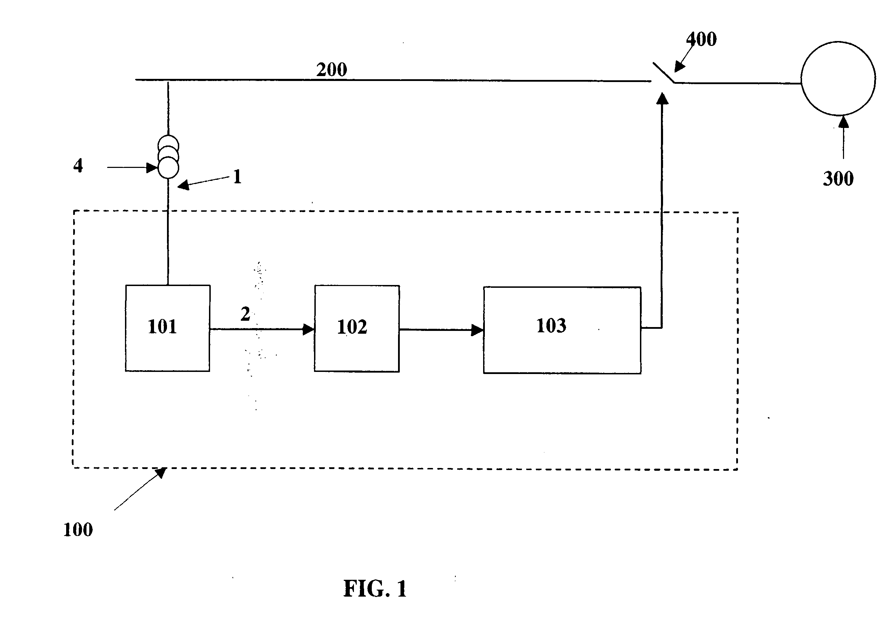

With reference to Figure 1, an electric motor 300 is connected to a power supply line 200; the line 200 is provided with suitable current detection sensors 4, for example current transformers, which detect the supply currents of the motor indicated in their entirety by the reference number 1, and means 400 for interrupting said currents.

Tripping of the interruption means 400, consisting for example of a contactor, is determined by a command signal imparted by a protection device 100 using the methods which will be described in detail in following.

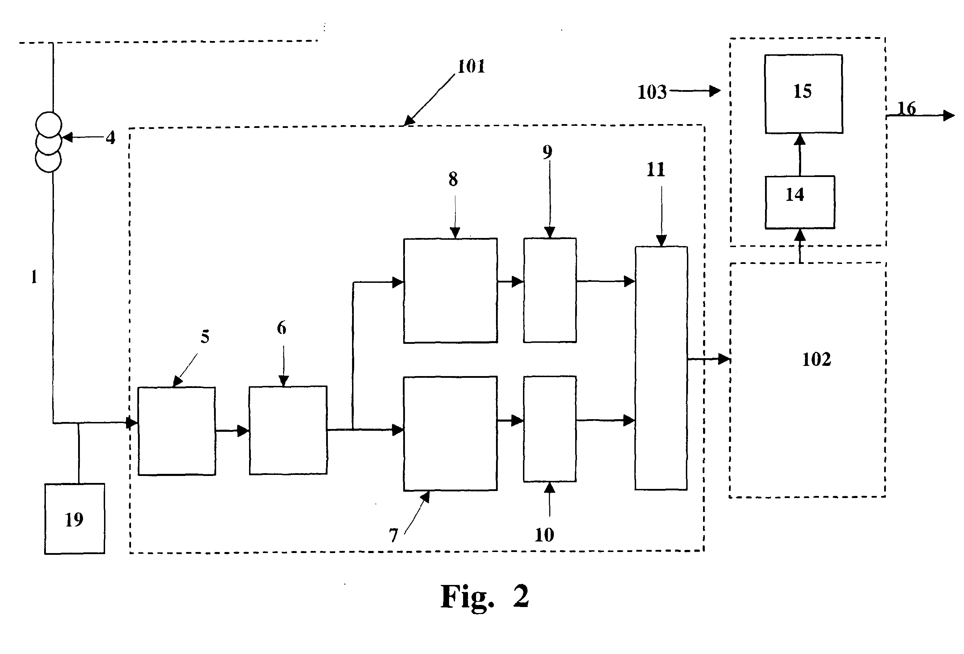

The protection device 100 according to the invention comprises acquisition and processing means 101 which receive at their input, from the sensors 4, analog signals indicating the supply currents 1 of the motor and which output to processing means 102 corresponding digital signals 2. Advantageously, as illustrated in Figure 2, the supply energy provided by the current transformers is stored in a power supply unit 19; in this way a quantity of energy is saved, said energy being able to be used for automatic supplying, if necessary, of the device at times when the motor power supply is interrupted; for example, this power supply unit may consist of one or more capacitors.

Depending on the input digital signals 2, the processing means 102 calculate the status variables of a thermal model of the motor, using the methods which will be described in detail hereinafter. In particular, the signals indicating the value of at least one of said status variables are provided to a control unit 103 which compares them with a predetermined threshold value; if the values calculated exceed the threshold, the unit 103 sends a tripping signal to the means 400 in order to interrupt the motor power supply.

As illustrated in detail in Figure 2, the acquisition and processing means 101 comprise conditioning means 5 which condition the input signals 1 so as to provide them with a correct level for input to converter means 6; these converter means 6, which consist for example of known A/D converters, suitably sample the signals received and convert them from analog to digital signals. In the embodiment of the device according to the invention, the analog signals are sampled at a periodic frequency $F_s$, ranging preferably between 150 Hz and 2 kHz.

The digital signals thus obtained are then input to first calculating means and to second calculating means 7.

The first calculating means 8 and the second calculating means 7 calculate, for each supply current, signals indicating, respectively, the square of the root mean square value of the current $(I_{RMS})^2$ and the square of the peak value $(I_p)^2$ The values $(I_{RMS})^2$ thus obtained are sent to first selection means 9 which select the highest value of $(I_{RMS})^2$; in turn, the peak values $(I_p)^2$ are sent to selection and compensation means 10.

The means 10 suitably compensate the input peak values $(I_p)^2$, in order to take account of any saturation of the current transformers, and select the highest value of $(I_p)^2$.

Generally saturation of the current transformers occurs for values of $I>I_{sat}$, where typically $I_{sat}=6In$ and In is the rated current of the current transformers used.

The two values thus selected are provided to second selection means 11; said means 1I send to the processing means 102 the signal indicating the highest value of $(I_{RMS})^2$ when $(I_{RMS})^2<(I_{lim})$, $I_{lim}$ being a predefined limit value, or the signal indicating the highest value of $(I_p)^2$ when $(I_{RMS})^2>(I_{lim})$.

In a preferred embodiment of the device according to the invention the predetermined limit $(I_{lim})$ is equal to 6In; in an equivalent manner, other limits could be defined, however, according to applicational requirements.

The selected signal, indicated in Figures 1 and 2 by the reference number 2, is then sent to the processing means 102 for calculation of the status variables of a thermal model of the motor, the status equations of which simulate, in particular, the temperature progression of the copper $T_{cu}$ and iron $T_{fe}$ in the motor. Preferably, the processing means 102 comprise a programmable memory selected from the group comprising: EPROM (Erasable Programmable Read-Only-Memory), EEPROM (Electrically Erasable Programmable Read-Only-Memory), flash memories, and PROM (Programmable Read-Only-Memory).

In the device according to the invention, the thermal model of the motor, during the heating transient, is based on the following difference equations with constant coefficients:

$$Tcu(t+1) = A \times Tcu(t) + B \times Tfe(t) + K \times I^2$$
$$Tfe(t+1) = C \times Tcu(t) + D \times Tfe(t) + H \times I^2 \qquad \textbf{(1)}$$

where A, B, C, D, K, H, are multiplicative coefficients, $T_{cu}$ e $T_{fe}$ are the status variables of the model and $I^2$ is the selected digital signal 2, indicating the supply currents of the motor.

In particular, in a preferred embodiment of the device according to the invention, the thermal model is calculated assuming that the coefficient H is zero; alternatively the value of H could be calculated in a manner which is entirely similar to that used for the other coefficients and which will be described hereinafter.

The two difference status equations are calculated with calculation frequencies $(F_{S1}, F_{S2})>F_S$ where $F_S$ is not a submultiple of $F_{S1}, F_{S2}$; advantageously, this solution allows the problems of aliasing to be avoided.

The processing means 102 therefore output signals indicating, respectively, temperatures of the copper $T_{cu}$ and iron $T_{fc}$ of the motor. In the embodiment of the device according to the invention, the signal indicating the temperature of the copper $T_{cu}$, is sent to comparator means 14 and is compared here with a predetermined threshold value; alternatively, and in an entirely equivalent manner, both the signals indicating the temperatures, as well as the signal for iron $T_{fe}$ alone, could be sent to the comparison means.

In particular, this threshold value is predetermined in accordance with the formula $T_{sgl}=\beta(I_{min})^2$ where $\beta$ is a coefficient which has the function of relating the rated value of the current to the rated value of $T_{cu}$, which is the operating temperature, and $I_{imn}$ is a minimum current value which is fixed by the designer on the basis of international specifications; for example, this value may range between 1.05 and $1.2I_1$ where $I_1$ is the rated supply current of the motor. The rated value of $T_{cu}$, as well as that of $T_{fe}$, are values which are obtained when the supply current is $=I_1$ and are values which are known a priori.

If the calculated value of $T_{cu}$ exceeds the predefined threshold $T_{sgl}$ which is dependent on the number of phases of the motor which are supplied, but is the same for all the classes of protection, the means 14 send an alarm signal to command means 15 which in turn send a tripping signal 16 to the interruption means 400. This thus results in tripping of the protection device and interruption of the motor power supply owing to a thermal overload condition which is present.

Advantageously, in the device according to the invention, the coefficients A, B, C, D and K which appear in the previous equations, as well as the initial values of $T_{ocu}$ and

$T_{ofe}$ for the "cold" transient, are calculated a priori in a specific manner for each class of overload protection and recorded in tables, using the following method.

For each class of protection, tripping times are fixed in the following situations:

- time $t_6$ for the cold transient, with current equal to $7.2I_1$;
- time $t_3$ for the hot transient, with current equal to $3I_1$;
- time $t_2$ for the hot transient, with current equal to $1.5I_1$;
- time $t_1$ for the hot transient, with current equal to $1.2I_1$.

In particular, the classes of protection are defined in accordance with that laid down by the international standard IEC 947-4-1.

The continuous-time equivalent of the system (**1**), i.e. the following system, is then considered:

$$\frac{dTcu(t)}{dt} = a \times Tcu(t) + b \times Tfe(t) + k \times I^2$$
$$\frac{dTfe(t)}{dt} = c \times Tcu(t) + d \times Tfe(t) \tag{2}$$

where for example the parameters a,b,c,d and k are linked to the parameters A,B,C,D and K which appear in (**1**), by the relations:

$$\begin{cases} A = 1 - a \times \Delta t_1 \\ B = b \times \Delta t_1 \\ K = k \times \Delta t_1 \\ C = c \times \Delta t_2 \\ D = 1 - d \times \Delta t_2 \end{cases} \tag{3}$$

in which $\Delta t_1$ and $\Delta t_2$ are the calculating steps used for the equations (1). The solutions of the system (2) are the following functions:

$$Tcu(t) = K_1 \times e^{\lambda_1 t} + K_2 \times e^{\lambda_2 t} + \frac{k \times d}{b \times c - a \times d} I^2$$
$$Tfe(t) = K_1 \times e^{\lambda_1 t} + K_2 \times e^{\lambda_2 t} - \frac{k \times c}{b \times c - a \times d} I^2 \tag{4}$$

where $\lambda_1$ and $\lambda_2$ are the eigenvalues of the model, i.e. the reciprocals of its time constants, which are obtained as a solution or the quadratic equation:

$$(\lambda - a)\lambda - d) - b \times c - \lambda^2 - (a-d) \times \lambda + a \times d - b \times c = 0 \qquad (5)$$

and $K_1$, $K_2$, $K_3$ and $K_4$ are values linked to $\lambda_1$, $\lambda_2$ and to the initial conditions of the model. i.e. to the values of $T_{cu}$ and $T_{ufe}$ at the start of the transient.

From the expression Tcu(t) which appears in (4) it is possible to obtain various equations, in the unknown values a,b,c,d and k, once the tripping times $t_6$, $t_3$, $t_2$e $t_1$ are assigned, along with other constraints such as the rated values of $T_{cu}$ and $T_{te}$.

Remembering that $T_{zl}$ indicates the predefined threshold, the value of which is obtained on the basis of the minimum current value which determines tripping, in asymptotic time, of the protection system, an example of the equation which can be obtained is as follows:

$$\text{Tsgl} = K_1 \times e^{\lambda_1 t} - K_2 \times e^{\lambda_2 t} - \frac{k \times d}{b \times c - a \times d} - (7.21_1)^2 \qquad (6)$$

which is nothing other than an indication of the constraint associated with cold tripping, with the current equal to $7.21_1$. in the time period $t_o$.

The non-linear equations of the type (6) which are obtained upon variation of the tripping time and initial condition in general cannot be solved exactly and are therefore solved using a squared minimum method.

By solving the equation of the type (6) the coefficients a,b,c,d and k. and the corresponding initial values for the cold transient, are obtained: by means of (3) the coefficients A,B,C,D and K are then obtained and recorded in suitable tables and will then be used by the device to calculate the status variables of the model. This results in the major advantage of being able to have coefficients which can be used in each case according to the class of the motor without having to adjust physically the protection system modifying the construction thereof or modifying the settings thereof.

An entirely similar method may be used to obtain the coefficients of the thermal model during the cooling phase; in this case the equations are obtained by applying cooling times instead of protection tripping times.

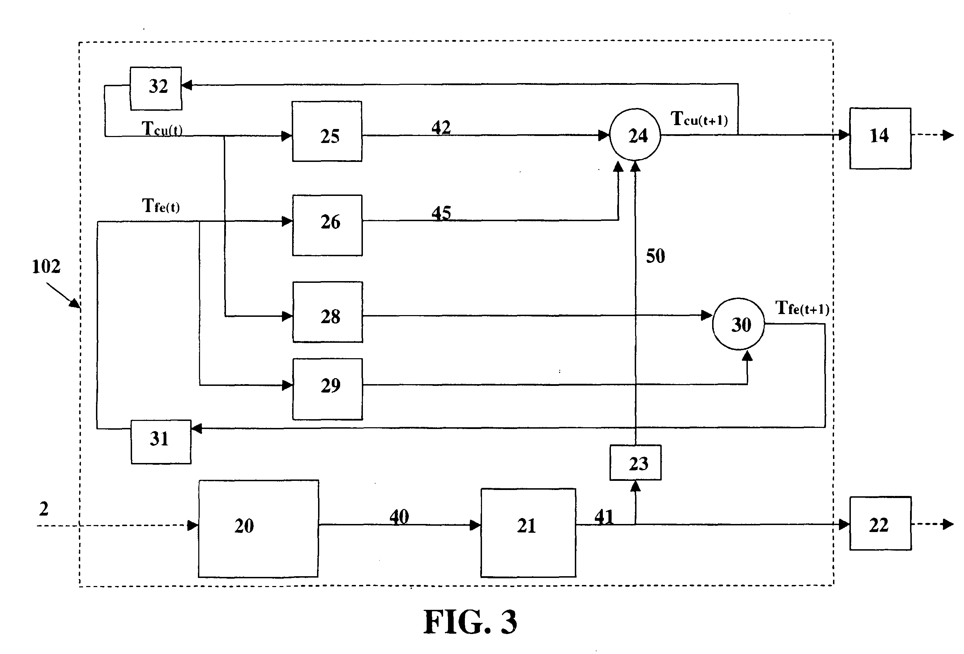

With reference to Figure 3, a possible embodiment of the processing means 102 will now be described. The digital signal 2 selected by the acquisition and processing means 102, indicating the highest value of $(I_p)^2$ or $(I_{RMS})^2$, is sent to first multiplier means 20 and multiplied there by the quantity $In/I_1$. The signal 40 obtained is sent to comparison means 21 and compared with two reference values $I_{LW}$ and $I_{UP}$; for example it is possible to have $I_{LW}=In$ and $I_{UP}=1,1In$. If the signal 40 is between $I_{LW}$ and in order to avoid problems of ripple, a value equal to $I_{LW}$ is assigned to this signal; the output signal 41 is sent to second multiplier means 23.

Advantageously, in the protection device according to the invention, it is possible to send the signal 41 to comparator means 22 which compare it with a current value equal to $I_{EP}$. In the case where the value of the signal 41 is greater than $I_{UP}$ the comparator means 22 output a signal indicating the danger of an overload; for example this signal may be used to light up a LED and visually warn an operator of the danger situation.

The means 23 multiply the signal 41 by the value of the coefficient K and send the signal obtained 50 to an adder node 24. Two other signals are sent to this node 24: the first signal 42, provided by the value of $T_{cu}$ at the instant t multiplied in fourth multiplier means 25 by the value of the coefficient A; the second signal 45, provided by the value of $T_{fe}$ at the instant t multiplied in fifth multiplier means 26 by the value of the coefficient B. The three signals 42, 45 and 50 are added together in the node 24 so as to obtain at the output the value of Tcu at the instant (t+1). This value is then sent to the comparator means 14 and compared with the threshold value in accordance with that previously described. The values of Tcu(t) and Tfe(t) are moreover sent respectively to the multiplier means 28 and 29 in which they are multiplied, respectively by the values of the coefficients C and D. The two signals are then added to the adder node 30 so as to obtain the value of Tfe(t+1). The signals Tfe(t+1) and Tcu(t+1) are then sent respectively into the blocks 31 and 32 which are memory locations for the calculated values; the values allocated in these blocks in turn form the values at the instant t for the next calculation step.

The coefficients A, B, C, D and K are pre-recorded in tables for each class of protection of the motor, according to the method previously described. These tables are also used to record the initial cold values T0fe and T0cu of the status variables which are used in the initial calculation step of the model.

**Claims**

1. Device (100) for the thermal overload protection of an electric motor (300) connected to a power supply line (200), said line (200) being provided with sensors (4) for detecting the currents supplying the motor (300) and means (400) for interrupting said currents, said device comprising acquisition and processing means (101) which acquire in input, from said detection sensors (4) analog signals (1) indicating the supply currents of the motor and calculate corresponding digital signals (2), said device comprising processing means (102) which, depending on said input digital signals (2), calculate the status variables of a thermal model of the motor, said status variables consisting in a first variable (Tcu) indicating the temperature of the copper and in a second variable (Tfe) indicating the temperature of the iron, **said device being characterized in that** said thermal model being based on status equations, the coefficients and initial cold values of the status variables of which are predetermined by means of:

   - definition of the tripping times of the protection system according to the class of motor and its rated supply current;
   - definition of a minimum current which determines tripping of the protection system and definition of the corresponding threshold values of the status variables;
   - calculation of the coefficients of the status equations and initial values of the status variables on the basis of the tripping times and the defined threshold values;
   - a control unit (103) which compares at least one of said status variables received at its input with a defined threshold value and, if it exceeds the threshold, sends a tripping signal to the interruption means in order to interrupt the power supply of the motor.

2. Device (100) for the thermal overload protection of an electric motor (300), according to Claim 1, **characterized in that** said acquisition and processing means (101) comprise conditioning means (5) which condition said input analog signals and supply them to converter means (6) which convert them into corresponding digital signals.

3. Device (100) or the thermal overload protection of an electric motor (300), according to Claim 2, **characterized in that** the acquisition and processing means (101) comprise first calculating means (8) which receive at their input from the converter means (6) said digital signals and output to first selection means (9) signals indicating the squares of the root mean square values of the supply currents $\left(I_{RMS}^{2}\right)$, said first selection means (9) providing second selection means (11) with the signal indicating the highest value of the squares of the rms values of the supply currents $\left(I_{RMS}^{2}\right)^{2}$.

4. Device (100) for the thermal overload protection of an electric motor (300), according to Claim 2, **characterized in that** the acquisition and processing means (101) comprise second calculating means (7) which receive at their input from the converter means (6) said digital signals and output to selection and compensation means (10) signals indicating the square of the peak values (Ip²) of the supply currents, said selection and compensation means (10) compensating the values received at their input and providing the second selection means (11) with the signal indicating the highest value of the squares of the peak values of the supply currents $\left(I_{p}^{2}\right)$.

5. Device (100) for the thermal overload protection of an electric motor (300), according to Claim 4, **characterized in that** the second selection means (11) send to the processing means (102) the signal indicating the highest value of the squares of the rms values of the supply currents $\left(I_{RMS}^{2}\right)^{2}$ when the squares of the rms values of the supply currents $\left(I_{RMS}^{2}\right)^{2}$ < Ilim, Ilim being a predetermined limit value, and send to the processing means (102) the signal indicating the highest value of the squares of the peak values of the supply currents $\left(I_{p}^{2}\right)$ when the squares of the rms values of the supply currents $\left(I_{RMS}^{2}\right)^{2}$ >Ilim.

6. Device (100) for the thermal overload protection of an electric motor (300), according to Claim 5, **characterized in that** the processing means (102) calculate, depending on the current signal received at their input, said first and second variables ($T_{cu}$, $T_{fe}$) and output to comparison means (14) signals indicating calculated values of the first variable (Tcu).

7. Device (100) for the thermal overload protection of an electric motor (300), according to Claim 6, **characterized in that** the control unit (103) comprises comparison means (14) which compare said signals indicating values of the first variable (Tcu) calculated with a defined thresholds value and, if they are greater than the threshold, output an alarm signal indicating a thermal overload to command means (15), said command means (15) sending a tripping signal to the interruption means (400).

8. Method for the thermal overload protection of an electric motor (300) connected to a power supply line (200), said line (200) being provided with sensors (4) for detecting the currents supplying the motor (300) and means (400) for interrupting said currents, said method comprising the following steps:

   a) acquiring, from said sensors (4), signals indicating the supply currents of the motor (300) and calculating digital signals corresponding to said analog signals;
   b) calculating the status variables of a thermal model of the motor (300) using said digital signals, said status variables consisting in a first variable (Tcu) indicating the temperature of the copper and in a second variable (Tfe) indicating the temperature of the iron,
   **said method being characterized in that** the thermal model is based on status equations, the coefficients and initial cold values of said variables of which are predetermined in the following manner:

   - definition of the tripping times of the protection system according to the class of motor and its rated supply current;
   - definition of a minimum current which determines tripping of the protection system and definition of the corresponding threshold values of the status variables;
   - calculation of the coefficients of the status equations and initial values of the status variables on the basis of the tripping times and the defined threshold values;

   c) comparing at least one of said status variables with a defined threshold value and, if it exceeds said threshold, sending a tripping signal to the interruption means (400) in order to interrupt the power supply of the motor (300).

9. Method for the thermal overload protection of an electric motor (300), according to Claim 8, **characterized in that** said step a) comprises:

   - conditioning the analog signals received at the input and converting them into corresponding digital signals, said analog signals being sampled with a frequency (Fs);

   - calculating digital signals indicating the squares of the root mean square values $\left( I_{RMS}^2 \right)$ and the squares of the peak values $\left( I_P^2 \right)$ of the motor supply currents;

   - selecting a signal indicating the highest value of the squares of the rms values of the supply currents $\left( I_P^2 \right)$

   - compensating the signals indicating the squares of the peak values of the supply currents (Ip) and selecting the signal indicating the highest value of the squares of the peak values of the supply currents $\left( I_{RMS}^2 \right)$

   - selecting the signal indicating the highest value of the squares of the rms values of the supply currents $\left( I_{RMS}^2 \right)$ when the squares of the rms values of the supply currents $\left( I_{RMS}^2 \right)$ < Ilim,, Ilim being a predetermined limit value, or the signal indicating the highest value of the squares of the peak values of the supply currents $\left( I_P^2 \right)$ when the squares of the rms values of the supply currents $\left( I_P^2 \right)$ > Ilim.

10. Method for the thermal overload protection of an electric motor (300) according to Claim 9, **characterized in that** said step b) comprises calculating, depending on the selected signal indicating the highest value of the squares of the peak values of the supply currents $\left( I_P^2 \right)$ or the squares of the rems values of the supply currents

$\left(I_{RMS}^{2}\right)$ , a system of two difference status equations of the type,

$$Tcu(t+1) = A \times Tcu(t) + B \times Tfe(t) + K \times I^{2}$$

$$Tfe(t+1) = C \times Tcu(t) + D \times Tfe(t) + H \times I^{2}$$

where A, B, C, D, K, H are predetermined coefficients, and Tcu and Tfe are status variables indicating the temperatures of the copper and the iron of the motor.

11. Method for the thermal overload protection of an electric motor (300) according to Claim 10, **characterized in that** said two difference status equations are calculated with calculation frequencies Fs1, Fs2>Fs where Fs is a sampling frequency and is not a submultiple of Fs1, Fs2.

12. Method for the thermal overload protection of an electric motor according to Claim 8, **characterized in that** said step c) comprises comparing the value indicating the temperature of the copper Tcu with the defined threshold value and, if it exceeds the threshold, sending an alarm signal indicating a thermal overload condition which is present.

**Patentansprüche**

1. Vorrichtung (100) für den thermischen Überlastungsschutz eines Elektromotors (300), der mit einer Leistungsversorgungsleitung (200) verbunden ist, wobei die Leitung (200) mit Sensoren (4) zum Erfassen des Stroms, der dem Motor (300) zugeführt wird, und mit Mitteln (400) zum Unterbrechen dieses Stroms ausgestattet ist, wobei die Vorrichtung Ermittlungs- und Verarbeitungsmittel (101) einschließt, die an ihrem Eingang analoge Signale (1) von den Erfassungssensoren (4) empfangen, die den Strom anzeigen, der dem Motor zugeführt wird, und entsprechende digitale Signale (2) berechnen, wobei die Vorrichtung Verarbeitungsmittel (102) aufweist, die abhängig von den eingegebenen digitalen Signalen (2) die Zustandsvariablen des thermischen Modells des Motors berechnen, wobei die Zustandsvariablen aus einer ersten Variablen (Tcu), welche die Temperatur des Kupfers anzeigt, und einer zweiten Variablen (Tfe), welche die Temperatur des Eisens anzeigt, bestehen, wobei die Vorrichtung **dadurch gekennzeichnet ist, dass** das thermische Modell auf Zustandsgleichungen beruht, wobei die Koeffizienten und kalten Anfangswerte der Zustandsvariablen auf folgende Weise vorbestimmt werden:

   - Definieren der Auslösezeiten des Schutzsystems gemäß der Motorklasse und deren Nennstrom;
   - Definieren eines Mindeststroms, der das Auslösen des Schutzsystems bestimmt und Definieren der entsprechenden Schwellenwerte der Zustandsvariablen;
   - Berechnen der Koeffizienten der Zustandsgleichungen und der Anfangswerte der Zustandsvariablen auf der Basis der Auslösezeiten und der definierten Schwellenwerte;
   - Empfangen mindestens einer der Zustandsvariablen am Eingang einer Steuereinheit (103), die sie mit einem definierten Schwellenwert vergleicht, und die, wenn der Schwellenwert überschritten wird, ein Auslösesignal zum Unterbrechungsmittel schickt, um die Leistungsversorgung des Motors zu unterbrechen.

2. Vorrichtung (100) für den thermischen Überlastungsschutz eines Elektromotors (300) nach Anspruch 1, **dadurch gekennzeichnet, dass** die Ermittlungs- und Verarbeitungsmittel (101) Aufbereitungsmittel (5) umfassen, die die analogen Eingangssignale aufbereiten und zu Wandlungsmitteln (6) schicken, die sie in entsprechende digitale Signale umwandeln.

3. Vorrichtung (100) für den thermischen Überlastungsschutz eines Elektromotors (300) nach Anspruch 2, **dadurch gekennzeichnet, dass** die Ermittlungs- und Verarbeitungsmittel (101) erste Rechenmittel (8) umfassen, die die digitalen Signale vom Wandlungsmittel (6) an ihrem Eingang empfangen und Signale, die die Quadrate der Effektivwerte des zugeführten Stroms $\left(I\frac{2}{RMS}\right)$ anzeigen, an erste Auswahlmittel (9) ausgeben, wobei die ersten Auswahlmittel (9) zweiten Auswahlmitteln (11) das Signal liefern, welches den höchsten Wert des Quadrats der Effektivwerte des zugeführten Stroms $\left(I\frac{2}{RMS}\right)$ anzeigt.

4. Vorrichtung (100) für den thermischen Überlastungsschutz eines Elektromotors (300) nach Anspruch 2, **dadurch gekennzeichnet, dass** die Ermittlungs- und Verarbeitungsmittel (101) zweite Rechenmittel (8) aufweisen, die die digitalen Signale vom Wandlungsmittel (6) an ihrem Eingang empfangen und Signale, die das Quadrat der Spitzenwerte des zugeführten Stroms $\left(I\frac{2}{p}\right)$ anzeigen, an Auswahl- und Kompensationsmittel (10) ausgeben, wobei die Auswahl- und Kompensationsmittel (10) die Werte, die sie an ihren Eingängen empfangen, kompensieren und den zweiten Auswahlmitteln (11) das Signal liefern, welches den höchsten Wert des Quadrats der Effektivwerte des zugeführten Stroms $\left(I\frac{2}{p}\right)$ anzeigt.

5. Vorrichtung (100) für den thermischen Überlastungsschutz eines Elektromotors (300) nach Anspruch 4, **dadurch gekennzeichnet, dass** die zweiten Auswahlmittel (11) das Signal, das den höchsten Wert der Quadrate der Effektivwerte des zugeführten Stroms $\left(I\frac{2}{RMS}\right)$ anzeigt, an die Verarbeitungsmittel (102) schicken, wenn die Quadrate der Effektivwerte des zugeführten Stroms $\left(I\frac{2}{RMS}\right)$ < Ilim, wobei Ilim ein vorgegebener Wert ist, und das Signal, das den höchsten Wert der Quadrate der Spitzenwerte des zugeführten Stroms ($Ip^2$) anzeigt, zu den Verarbeitungsmitteln (102) schicken, wenn die Quadrate der Effektivwerte des zugeführten Stroms $\left(I\frac{2}{RMS}\right)$ > Ilim.

6. Vorrichtung (100) für den thermischen Überlastungsschutz eines Elektromotors (300) nach Anspruch 5, **dadurch gekennzeichnet, dass** die Verarbeitungsmittel (102) abhängig vom Stromsignal, dass sie an ihrem Eingang empfangen, die ersten und zweiten Variablen (Tcu, Tfe) berechnen und Signale, die errechnete Werte für die die erste Variable (Tcu) anzeigen, an Vergleichsmittel (14) ausgeben.

7. Vorrichtung (100) für den thermischen Überlastungsschutz eines Elektromotors (300) nach Anspruch 6, **dadurch gekennzeichnet, dass** die Steuereinheit (103) Vergleichsmittel (14) aufweist, die die Signale, welche errechnete Werte für die erste Variable (Tcu) anzeigen, mit einem definierten Schwellenwert vergleichen, und, wenn sie größer sind als der Schwellenwert, ein Alarmsignal, das eine thermische Überlastung anzeigt, an Befehlsmittel (15) ausgeben, wobei die Befehlsmittel (15) ein Auslösesignal an das Unterbrechungsmittel (400) ausgeben.

8. Verfahren (100) für den thermischen Überlastungsschutz eines Elektromotors (300), der mit einer Leistungsversorgungsleitung (200) verbunden ist, wobei die Leitung (200) mit Sensoren (4) zum Erfassen des Stroms, der dem Motor (300) zugeführt wird, und mit Mitteln (400) zum Unterbrechen dieses Stroms ausgestattet ist, wobei das Verfahren die folgenden Schritte umfasst:

a) Ermitteln von Signalen, die den Strom anzeigen, der dem Motor (300) zugeführt wird, von den Sensoren (4) und Berechnen von digitalen Signalen (2), die diesen analogen Signalen entsprechen;

b) Berechnen der Zustandsvariablen eines thermischen Modells des Motors (300) unter Verwendung der digitalen Signale, wobei die Zustandsvariablen aus einer ersten Variablen (Tcu), welche die Temperatur des Kupfers anzeigt, und einer zweiten Variablen (Tfe), welche die Temperatur des Eisens anzeigt, bestehen, wobei das Verfahren **dadurch gekennzeichnet ist, dass** das thermische Modell auf Zustandsgleichungen beruht, deren Koeffizienten und kalte Anfangswerte auf folgende Weise vorbestimmt werden:

- Definieren der Auslösezeiten des Schutzsystems gemäß der Motorklasse und deren Nennstrom;
- Definieren eines Mindeststroms, der das Auslösen des Schutzsystems bestimmt und Definieren der entsprechenden Schwellenwerte der Zustandsvariablen;
- Berechnen der Koeffizienten der Zustandsgleichungen und der Anfangswerte der Zustandsgleichungen auf der Basis der Auslösezeiten und der definierten Schwellenwerte;

c) Vergleichen mindestens einer der Zustandsvariablen mit einem definierten Schwellenwert und, falls sie den Schwellenwert übertrifft, Schicken eines Auslösesignals an das Unterbrechungsmittel (400), um die Leistungszufuhr zum Motor (300) zu unterbrechen.

9. Verfahren nach Anspruch 8 für den thermischen Überlastungsschutz eines Elektromotors (300), **dadurch gekennzeichnet, dass** Schritt a) umfasst:

- Aufbereiten der analogen Signale, die am Eingang empfangen werden, und Umwandeln derselben in entsprechende digitale Signale, wobei die analogen Signale mit einer Häufigkeit (Fs) abgetastet werden;

- Berechnen von digitalen Signalen, welche die Quadrate der Effektivwerte des zugeführten Stroms $\left( I\dfrac{2}{RMS} \right)$

und die Quadrate der Spitzenwerte $\left( I\dfrac{2}{p} \right)$ des dem Motor zugeführten Stroms anzeigen;

- Auswählen eines Signals, das den höchsten Wert der Quadrate der Effektivwerte des zugeführten Stroms $\left( I\dfrac{2}{RMS} \right)$ anzeigt,

- Kompensieren des Signals, das die Quadrate der Spitzenwerte (Ip) des zugeführten Stroms anzeigt, und Auswählen des Signals, das den höchsten Wert der Quadrate der Spitzenwerte des zugeführten Stroms $\left( I\dfrac{2}{p} \right)$ anzeigt;

- Auswählen des Signals, das den höchsten Wert für die Quadrate der Effektivwerte des zugeführten Stroms $\left( I\dfrac{2}{RMS} \right)$ anzeigt, wenn die Quadrate der Effektivwerte des zugeführten Stroms $\left( I\dfrac{2}{RMS} \right)$ < Ilim, wobei Ilim ein vorgegebener Grenzwert ist, oder des Signals, das den höchsten Wert der Quadrate der Spitzenwerte für den zugeführten Strom $\left( I\dfrac{2}{p} \right)$ anzeigt, wenn die Quadrate der Effektivwerte des zugeführten Stroms $\left( I\dfrac{2}{RMS} \right)$ > Ilim.

10. Verfahren nach Anspruch 9 für den thermischen Überlastungsschutz eines Elektromotors (300), **dadurch gekennzeichnet, dass** Schritt b) das Berechnen eines Systems von zwei Differenzzustandsgleichungen der Art

$$Tcu(t+1) \;=\; A \times Tcu(t) + B \times Tfe(t) + K \times I^2$$

$$Tfe(t+1) \;=\; C \times tcu(t) + D \times Tfe(t) + H \times I^2$$

abhängig vom ausgewählten Signal, das den höchsten Wert für die die Quadrate der Effektivwerte des zugeführten Stroms $\left( I \dfrac{2}{RMS} \right)$ oder für die Quadrate der Spitzenwerte für den zugeführten Strom $\left( I \dfrac{2}{p} \right)$ anzeigt, umfasst, wobei A, B, C, D, K, H vorgegebene Koeffizienten sind, und Tcu und Tfe Zustandsvariablen sind, die die Temperaturen des Kupfers und des Eisens des Motors anzeigen.

**11.** Verfahren nach Anspruch 10 für den thermischen Überlastungsschutz eines Elektromotors (300), **dadurch gekennzeichnet, dass** die beiden Differenzzustandsgleichungen mit Berechungshäufigkeiten Fs1, Fs2 > Fs berechnet werden, wobei Fs eine Abtasthäufigkeit ist und kein ganzzahliger Teiler von Fs1, Fs2 ist.

**12.** Verfahren nach Anspruch 8 für den thermischen Überlastungsschutz eines Elektromotors (300), **dadurch gekennzeichnet, dass** Schritt c) das Vergleichen des Wertes, der die Temperatur des Kupfers Tcu anzeigt, mit dem vorgegebenen Schwellenwert und, falls sie den Schwellenwert übertrifft, das Schicken eines Alarmsignals, das einen gegebenen thermischen Überlastungszustand anzeigt, umfasst.

## Revendications

**1.** Dispositif (100) pour la protection contre une surcharge thermique d'un moteur électrique (300) connecté à une ligne d'alimentation (200), ladite ligne (200) étant pourvue de capteurs (4) pour détecter les courants alimentant le moteur (300) et de moyens (400) pour interrompre lesdits courants, ledit dispositif comprenant des moyens d'acquisition et de traitement (101) qui acquièrent en entrée, desdits capteurs de détection (4), des signaux analogiques (1) indiquant les courants d'alimentation du moteur et qui calculent des signaux numériques (2) correspondants, ledit dispositif comprenant des moyens de traitement (102) qui, en fonction desdits signaux numériques (2) d'entrée, calculent les variables d'état d'un modèle thermique du moteur, lesdites variables d'état consistant en une première variable (Tcu) indiquant la température du cuivre et une deuxième variable (Tfe) indiquant la température du fer, **ledit dispositif étant caractérisé en ce que** ledit modèle thermique est basé sur des équations d'état, les coefficients et les valeurs à froid initiales des variables d'état de celui-ci sont prédéterminés aux moyens de :

- la définition des temps de déclenchement du système de protection conformément à la catégorie du moteur et à son courant d'alimentation nominal ;
- la définition d'un courant minimum qui détermine le déclenchement du système de protection et la définition des valeurs de seuil correspondantes des variables d'état ;
- le calcul des coefficients des équations d'état et des valeurs initiales des variables d'état sur la base des temps de déclenchement et des valeurs de seuil définies;
- une unité de commande (103) qui compare au moins l'une desdites variables d'état reçues à son entrée avec une valeur de seuil définie et, si elle dépasse la valeur de seuil, envoie un signal de déclenchement aux moyens d'interruption afin d'interrompre l'alimentation du moteur.

**2.** Dispositif (100) pour la protection contre une surcharge thermique d'un moteur électrique (300) selon la revendication 1, **caractérisé en ce que** lesdits moyens d'acquisition et de traitement (101) comprennent des moyens de conditionnement (5) qui conditionnent lesdits signaux analogiques d'entrée et les délivrent à des moyens de conversion (6) qui les convertissent en des signaux numériques correspondants.

**3.** Dispositif (100) pour la protection contre une surcharge thermique d'un moteur électrique (300) selon la revendication 2, **caractérisé en ce que** les moyens d'acquisition et de traitement (101) comprennent des premiers moyens de calcul (8) qui reçoivent à leur entrée lesdits signaux numériques depuis les moyens de conversion (6) et qui délivrent auxdits premiers moyens de sélection (9) des signaux indiquant les carrés des valeurs efficaces des courants d'alimentation ($I_{RMS}^2$), lesdits premiers moyens de sélection (9) fournissant à des deuxièmes moyens de sélection (11) le signal indiquant la valeur la plus élevée des carrés des valeurs efficaces des courants d'alimentation ($I_{RMS}^2$).

**4.** Dispositif (100) pour la protection contre une surcharge thermique d'un moteur électrique (300) selon la revendication 2, **caractérisé en ce que** les moyens d'acquisition et de traitement (101) comprennent des deuxièmes moyens de calcul (7) qui reçoivent à leur entrée lesdits signaux numériques depuis les moyens de conversion (6), et qui délivrent aux moyens de détection et de compensation (10) des signaux indiquant le carré des valeurs crêtes ($I_p^2$) des courants d'alimentation, lesdits moyens de sélection et de compensation (10) compensant les valeurs reçues à leur entrée et fournissant aux deuxièmes moyens de sélection (11) le signal indiquant la valeur la plus élevée des carrés des valeurs crêtes des courants d'alimentation ($Ip^2$).

**5.** Dispositif (100) pour la protection contre une surcharge thermique d'un moteur électrique (300) selon la revendication 4, **caractérisé en ce que** les deuxièmes moyens de sélection (11) envoient aux moyens de traitement (102) le signal indiquant la valeur la plus élevée des carrés des valeurs efficaces des courants d'alimentation ($I_{RMS}^2$) lorsque les carrés des valeurs efficaces des courants d'alimentation ($I_{RMS}^2$) < Ilim, Ilim étant une valeur limite prédéterminée, et envoient aux moyens de traitement (102) le signal indiquant la valeur la plus élevée des carrés des valeurs crêtes des courants d'alimentation ($Ip^2$) lorsque les carrés des valeurs efficaces des courants d'alimentation ($I_{RMS}^2$) > Ilim.

**6.** Dispositif (100) pour la protection contre une surcharge thermique d'un moteur électrique (300) selon la revendication 5, **caractérisé en ce que** les moyens de traitement (102) calculent, en fonction du signal de courant reçu à leur entrée, lesdites première et deuxième variables (Tcu, Tfe) et délivrent à des moyens de comparaison (14) des signaux indiquant les valeurs calculées de la première variable (Tcu).

**7.** Dispositif (100) pour la protection contre une surcharge thermique d'un moteur électrique (300) selon la revendication 6, **caractérisé en ce que** l'unité de commande (103) comprend des moyens de comparaison (14) qui comparent lesdits signaux indiquant les valeurs de la première variable (Tcu) calculée avec une valeur de seuil définie et, s'ils sont supérieurs à la valeur de seuil, délivrent un signal d'alarme indiquant une surcharge thermique à des moyens de commande (15), lesdits moyens de commande (15) envoyant un signal de déclenchement aux moyens d'interruption (400).

**8.** Procédé pour la protection contre une surcharge thermique d'un moteur électrique (300) connecté à une ligne d'alimentation (200), ladite ligne (200) étant pourvue de capteurs (4) pour détecter les courants alimentant le moteur (300) et de moyens (400) pour interrompre lesdits courants, ledit procédé comprenant les étapes suivantes :

a) acquérir, desdits capteurs (4), des signaux indiquant les courants d'alimentation du moteur (300) et calculer des signaux numériques correspondant auxdits signaux analogiques ;
b) calculer les variables d'état d'un modèle thermique du moteur (300) en utilisant lesdits signaux numériques, lesdites variables d'état consistant en une première variable (Tcu) indiquant la température du cuivre et en une deuxième variable (Tfe) indiquant la température du fer,
**ledit procédé étant caractérisé en ce que** le modèle thermique est basé sur des équations d'état, les coefficients et les valeurs à froid initiales desdites variables de celui-ci sont prédéterminés de la manière suivante :

- la définition des temps de déclenchement du système de protection conformément à la catégorie du moteur et à son courant d'alimentation nominal ;
- la définition d'un courant minimum qui détermine le déclenchement du système de protection et la définition des valeurs de seuil correspondantes des variables d'état ;
- le calcul des coefficients des équations d'état et des valeurs initiales des variables d'état sur la base des temps de déclenchement et des valeurs de seuil définies ;

c) comparer au moins l'une desdites variables d'état avec une valeur de seuil définie et, si elle dépasse ladite valeur de seuil, envoyer un signal de déclenchement aux moyens d'interruption (400) afin d'interrompre l'alimentation du moteur (300).

**9.** Procédé pour la protection contre une surcharge thermique d'un moteur électrique (300) selon la revendication 8, **caractérisé en ce que** ladite étape a) comprend :

- le conditionnement des signaux analogiques reçus à l'entrée et leur conversion en des signaux numériques correspondants, lesdits signaux analogiques étant échantillonnés à une fréquence (Fs) ;
- le calcul de signaux numériques indiquant les carrés des valeurs efficaces ($I_{RMS}^2$) et les carrés des valeurs crêtes ($Ip^2$) des courants d'alimentation de moteur ;
- la sélection d'un signal indiquant la valeur la plus élevée des carrés des valeurs efficaces des courants d'alimentation ($I_{RMS}^2$) ;
- la compensation des signaux indiquant les carrés des valeurs crêtes des courants d'alimentation (Ip) et la sélection du signal indiquant la valeur la plus élevée des carrés des valeurs crêtes des courants d'alimentation ($Ip^2$) ;
- la sélection du signal indiquant la valeur la plus élevée des carrés des valeurs efficaces des courants d'ali-

mentation ($I_{RMS}^2$) lorsque les carrés des valeurs efficaces des courants d'alimentation ($I_{RMS}^2$) < Ilim, Ilim étant une valeur limite prédéterminée, ou le signal indiquant la valeur la plus élevée des carrés des valeurs crêtes des courants d'alimentation ($I_P^2$) lorsque les carrés des valeurs efficaces des courants d'alimentation ($I_{RMS}^2$) > Ilim.

10. Procédé pour la protection contre une surcharge thermique d'un moteur électrique (300) selon la revendication 9, **caractérisé en ce que** ladite étape b) comprend le calcul, en fonction du signal sélectionné indiquant la valeur la plus élevée des carrés des valeurs efficaces des courants d'alimentation ($I_{RMS}^2$) ou des carrés des valeurs crêtes des courants d'alimentation ($Ip^2$), un système de deux équations d'état de différence du type

$$Tcu(t+1) = A \times Tcu(t) + B \times Tfe(t) + K \times I^2$$

$$Tfe(t+1) = C \times Tcu(t) + D \times Tfe(t) + H \times I^2$$

où A, B, C, D, K, H sont des coefficients prédéterminés, et Tcu et Tfe sont des variables d'état indiquant les températures du cuivre et du fer du moteur.

11. Procédé pour la protection contre une surcharge thermique d'un moteur électrique (300) selon la revendication 10, **caractérisé en ce que** lesdites deux équations d'état de différence sont calculées avec des fréquences de calcul Fs1, Fs2 > Fs, où Fs est une fréquence d'échantillonnage et n'est pas un sous-multiple de Fs1, Fs2.

12. Procédé pour la protection contre une surcharge thermique d'un moteur électrique selon la revendication 8, **caractérisé en ce que** ladite étape c) comprend la comparaison de la valeur indiquant la température du cuivre Tcu avec la valeur de seuil définie et, si elle dépasse la valeur de seuil, l'envoie d'un signal d'alarme indiquant la présence d'une condition de surcharge thermique.

FIG. 1

**Fig. 2**

EP 0 999 629 B1

FIG. 3

**EP 0 999 629 B1**

**REFERENCES CITED IN THE DESCRIPTION**

**Patent documents cited in the description**

- US 4547826 A